# EUROPÄISCHE PATENTSCHRIFT

(11) **EP 3 627 008 B1**
(45) Veröffentlichungstag und Bekanntmachung des Hinweises auf die Patenterteilung: **27.10.2021**
(21) Anmeldenummer: 19198775.9
(22) Anmeldetag: 20.09.2019
(51) Int. Cl.: F16J 15/08

(54) **ZYLINDERKOPFDICHTUNG MIT DEFINIERT ASYMMETRISCH INTERAGIERENDEM SICKENPAAR**
CYLINDER HEAD GASKET WITH A DEFINED ASYMMETRIC INTERACTING BEAD PAIR
JOINT D'ÉTANCHÉITÉ DE CULASSE POURVU DE PAIRE DÉFINIE DE SERTISSURES INTERACTIVES DE MANIÈRE ASYMÉTRIQUE

(30) Priorität: 21.09.2018 DE 202018105431 U
(43) Veröffentlichungstag der Anmeldung: 25.03.2020
(73) Patentinhaber: REINZ-Dichtungs-GmbH, 89233 Neu-Ulm (DE)
(72) Erfinder: Kuhn, Wilhelm, 89160 Dornstadt-Tomerdingen (DE); Waldvogel, Hans, 86381 Krumbach (DE); Krautmann, Wilhelm, 89365 Röfingen (DE)
(74) Vertreter: Pfenning, Meinig & Partner mbB

(56) Entgegenhaltungen:
- EP-A2- 1 462 641

## Beschreibung

Die Erfindung betrifft eine Zylinderkopfdichtung zum Abdichten zumindest eines Brennraums eines Verbrennungsmotors mit zumindest einem Paar von Lagen, den Sickenlagen, wobei jedes Paar der Lagen, also jedes Lagenpaar, eine erste Lage mit einer ersten Sicke und eine zweite Lage mit einer zweiten Sicke aufweist, wobei die erste Sicke und die zweite Sicke in Anlage aneinander angeordnet sind, und beide Sicken zumindest abschnittsweise umlaufend um eine Brennraum-Aussparung der Zylinderkopfdichtung verlaufen. Dabei weist zumindest eine der Lagen und/oder eine weitere Lage der Zylinderkopfdichtung einen Stopper auf.

Wie beispielsweise in der DE 10 2005 025 942 A1 dargelegt, werden vor allem bei Zylinderkopfdichtungen die jeweiligen Durchgangsöffnungen, also beispielsweise die, eine oder mehrere jeweilige Brennraum-Aussparungen umgebenden, Sicken, durch ständigen Druck- und Temperaturwechsel sehr stark beansprucht. Diese Sicken können ihre Funktion jedoch nur so lange erfüllen, wie ein gewisses Maß an Elastizität der Sicke erhalten bleibt. Dies wird typischerweise durch zusätzliche Hilfsmittel, welche eine vollständige plastische Verformung verhindern, erreicht. Ein übliches Mittel sind hier Verformungsbegrenzer, welche auch als Stopper bezeichnet werden. Derartige Stopper sind beispielsweise in der WO 01/96768 A1 oder der EP 1 298 364 A2 beschrieben. In der EP 1462641 A2 wird eine Zylinderkopfdichtung gemäß des Oberbegriffs von Anspruch 1 beschrieben.

Im Stand der Technik wird nun zur vollständigen Abdichtung um zumindest eine Brennraum-Aussparung herum eine bestimmte ausgewählte Kombination von Sicke und zugehörigem Stopper angewandt. Die Sicke ist dabei grundsätzlich vorzugsweise als Vollsicke, insbesondere als symmetrische Vollsicke ausgebildet. Dabei ist meist der Stopper öffnungs- oder brennraumseitig ausgebildet und die Sicke schließt sich an der der Durchgangsöffnung oder Brennraum-Aussparung abgewandten Seite an den Stopper an. Allerdings sind auch umgekehrte Anordnungen möglich, bei welchen dann die Sicke zwischen Brennraum-Aussparung und Stopper angeordnet ist. In den meisten Zylinderkopfdichtungen für Verbrennungsmotoren sind die Zylinderabstände sehr gering, so dass im Stegbereich zwischen einzelnen Brennraum-Aussparungen nur ein sehr begrenzter Bauraum zur Verfügung steht. Hier wird die Vollsicke üblicherweise so ausgeführt, dass ihr dem Brennraum abgewandter Schenkel nicht in den Stegbereich einläuft, sondern brillenförmig an dem/den Stegbereich(en) vorbei geführt wird. Der dem Brennraum zugewandte Sickenschenkel wird dagegen durch den Stegbereich geführt und bildet mit dem entsprechenden Sickenschenkel des benachbarten Brennraumes eine andere Vollsicke. Auch in diesem Fall werden die Sicken durch den ständigen Druck- und Temperaturwechsel stark beansprucht. Bei extrem wenig Platz im Stegbereich wird der Stopper häufig so ausgeführt, dass er im Stegbereich unterbrochen wird.

Der vorliegenden Erfindung liegt die Aufgabe zugrunde, die Lebensdauer einer Zylinderkopfdichtung zu erhöhen.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Ein Aspekt betrifft eine Zylinderkopfdichtung zum Abdichten zumindest eines Brennraums, also eines oder mehrerer Brennräume, mit zumindest einem Paar von Lagen, den Sickenlagen, wobei jedes Paar von Lagen, also jedes Lagenpaar, eine erste metallische Lage mit einer ersten Sicke und eine von der ersten Lage verschiedene zweite metallische Lage mit einer zweiten Sicke aufweist. Die Lagen können auch als erste Sickenlage und zweite Sickenlage bezeichnet werden. Dabei sind die erste Sicke und die zweite Sicke in Anlage aneinander angeordnet. Dies ist vorzugsweise bei bestimmungsgemäßem Gebrauch der Zylinderkopfdichtung der Fall, also insbesondere bei Verbau und/oder Kompression der Zylinderkopfdichtung senkrecht zu ihrer Haupterstreckungsebene. Bei unkomprimierter Zylinderkopfdichtung können die beiden Sicken auch voneinander beabstandet in unterschiedlichen Lagenebenen parallel zur Haupterstreckungsebene der Zylinderkopfdichtung übereinander angeordnet sein. Die beiden Sickenlagen sind dabei bevorzugt zueinander nächste Lagen, also nächste Nachbarn, sodass keine weitere Lage zwischen den beiden Sickenlagen angeordnet ist. Es können also erste Sicke und zweite Sicke an ihren Sickenfüßen oder ihren Sickendächern aneinander anliegen. Dann liegt insbesondere das Sickendach der ersten Sicke an dem Sickendach der zweiten Sicke an oder die Sickenfüße der ersten Sicke an den Sickenfüßen der zweiten Sicke. Das Sickendach einer Sicke kann an seinem höchsten, also am weitesten von der restlichen Sickenlage entfernten Punkt auch als Sickenkamm bezeichnet werden. Besonders bevorzugt ist eine Anordnung des Sickenkamms der ersten Sicke an dem Sickenkamm der zweiten Sicke, was ein Sonderfall der Anordnung von Sickendach an Sickendach ist.

Beide Sicken verlaufen zumindest abschnittsweise umlaufend, also abschnittsweise umlaufend oder vollständig umlaufend, um zumindest eine Brennraum-Aussparung, also eine oder mehrere Brennraum-Aussparungen, der Zylinderkopfdichtung. Bei den üblichen Mehrzylinderkopfdichtungen wird hier aufgrund des begrenzten Bauraums oft nicht jede einzelne Durchgangsöffnung oder Brennraum-Aussparung einzeln oder individuell von einer Sicke umgeben. Vielmehr kann hier der von den Durchgangsöffnungen oder Brennraum-Aussparungen jeweils ferner liegende Sickenschenkel auch nicht in den Stegbereich zwischen den Brennräumen geführt sein, während der den der jeweiligen Durchgangsöffnung oder Brennraum-Aussparung näherliegende Sickenschenkel mit dem entsprechenden Sickenschenkel der benachbarten Durchgangsöffnung oder benachbarten Brennraum-Aussparung kombiniert wird und so als neu kombinierte Vollsicke durch den Stegbereich geführt wird.

Zumindest eine der Sickenlagen und/oder eine weitere Lage der Zylinderkopfdichtung weist einen Stopper auf. Ein jeweiliger Stopper kann in der ersten Sickenlage und/oder der zweiten Sickenlage und/oder der weiteren Lage ausgebildet sein. Er kann entweder brennraumseitig, also zwischen der jeweiligen Sicke und der Brennraum-Aussparung, oder auf der dem Brennraum abgewandten Seite, also so, dass die jeweilige Sicke zwischen dem Stopper und der Brennraum-Aussparung angeordnet ist, angeordnet sein, oder auch als Doppelstopper mit einem brennraumseitig und auf der dem Brennraum abgewandten Seite angeordneten Stopper ausgebildet sein. Ist der Stopper in der weiteren Lage ausgebildet, so gilt er als brennraumseitig oder auf der dem Brennraum abgewandten Seite angeordnet, wenn eine zugeordnete Orthogonalprojektion auf eine der Sickenlagen brennraumseitig beziehungsweise auf der dem Brennraum abgewandten Seite angeordnet ist.

Dabei beträgt die Steifigkeit der zweiten Sicke höchstens 60% der Steifigkeit der ersten Sicke. Die zweite Sicke ist also so ausgelegt, dass sie aufgrund ihrer Gestaltung eine gegenüber der ersten Sicke reduzierte Rückfederung aufweist. Dabei können geometrische Eigenschaften der beiden Sicken, beispielsweise eine Sickenhöhe und/oder eine Sickenbreite, und/oder Eigenschaften der zugehörigen Sickenlagen, beispielsweise eine Lagendicke und/oder ein Lagenmaterial, gleich oder im Wesentlichen gleich sein. Insbesondere können die beiden Sicken geometrisch identisch sein. Durch voneinander abweichende Herstellungsprozesse kann dabei dennoch die unterschiedliche Steifigkeit der Sicken erzielt werden, beispielsweise indem die Sickenlagen nach unterschiedlichen Prägevorgängen wieder in die gleiche (Sicken-)Form gewalzt werden. Unter im Wesentlichen gleich kann dabei "bis auf eine vorgegebene Abweichung gleich" verstanden werden, wobei die vorgegebene Abweichung beispielsweise 5% oder 10% oder 20% jeweiliger die Sicken oder die Sickenlagen beschreibender Parameter wie Sickenhöhe, Sickenbreite, Sickenwölbung, Sickenlagendicke etc. betragen kann.

Dieser Gestaltung liegt die Erkenntnis zu Grunde, dass eine Vielzahl an Asymmetriefaktoren ohne Gegenmaßnahmen zu unterschiedlichen Lebenserwartungen der beiden einander zugeordneten Sicken führt. Hierzu zählen unterschiedliche Blechdicken, unterschiedliche Blechmaterialien, unterschiedliche Wärmebehandlung vor Verbau, unterschiedliche Wärmebeeinflussung im verbauten Zustand, unterschiedliche Wechselwirkungen mit einem Stopper, unterschiedliche Beschichtungen sowie unterschiedliche Abfolge von Beschichten und Formgebung. Die genannten Asymmetriefaktoren können durch die unterschiedliche Steifigkeit der Sicken teilweise oder ganz kompensiert werden. Daher kann, auch wenn Ergebnisse gebräuchlicher, auf dem Finite-Elemente-Ansatz basierender Berechnungsmethoden für Sicken mit unterschiedlicher Steifigkeit eine verschlechterte Dichtleistung zeigen, insgesamt unter realen Bedingungen dennoch eine gute, d.h. im Idealfall für symmetrische Sicken errechnete Dichtleistung erreicht werden.

Überdies hat die unterschiedliche Steifigkeit der Sicken den Vorteil, dass die bei gleicher Rückfederung beider Sicken schneller ermüdende Sicke durch die Reduktion der Steifigkeit eine höhere Lebensdauer bekommt. Dies geht insbesondere darauf zurück, dass die Dichtspaltbewegung reduziert wird. Gleichzeitig wird ein größerer Anteil der zur Verpressung der Flachdichtung zur Verfügung stehenden Schraubenkräfte in den Stopper eingeleitet. Die reduzierte Rückfederung der zweiten Sicke gegenüber der ersten Sicke und der Unterschied zwischen den beiden Steifigkeiten der Sicken erhöht somit die Dauerhaltbarkeit der Zylinderkopfdichtung. Es wird also bewusst eine Sicke, die zweite Sicke, schwächer ausgelegt, um ihr eine höhere Lebenserwartung zu geben, da eine wesentlich geringere Ermüdungsgefahr besteht. Die Steifigkeit kann beispielsweise in Newton pro Millimeter oder äquivalent vorgegeben sein und unter einer vorgegebenen Referenzbedingung gemessen werden. Beispielsweise kann als Referenzbedingung eine vorgegebene Höhe der Sicken, auf welche die jeweiligen Sicken komprimiert werden, gewählt werden. Ein exemplarischer Wert ist 30 µm, er kann aber auch 60 oder 45 µm betragen oder einen beliebigen Wert im Spektrum zwischen 30 und 60 µm. Der exemplarische Wert gibt dann die Sickenhöhe, also die Höhe der auf beispielsweise 30 µm komprimierten Sicke im Vergleich zur vollständig komprimierten Sicke an, bei welcher zum Beispiel unter Verwendung eines Verformungs-Linienpressungs-Diagramms die Steifigkeit bestimmt wird.

In einer vorteilhaften Ausführungsform ist dabei vorgesehen, dass die Steifigkeit der zweiten Sicke höchstens 50%, insbesondere höchstens 40%, bevorzugt höchstens 35% der Steifigkeit der ersten Sicke beträgt. Das hat den Vorteil, dass die Dauerhaltbarkeit in besonderem Maße erhöht wird, da der Unterschied zwischen den beiden Steifigkeiten größer ist.

Dabei kann insbesondere vorgesehen sein, dass die Steifigkeit der zweiten Sicke mindestens 5%, insbesondere mindestens 10%, bevorzugt mindestens 15% der Steifigkeit der ersten Sicke beträgt. Das hat den Vorteil, dass Dichtverhalten und Lebensdauer verbessert sind, da der Unterschied zwischen den beiden Steifigkeiten ein vorgegebenes Höchstmaß nicht überschreitet.

In einer weiteren vorteilhaften Ausführungsform ist vorgesehen, dass eine Höhe, die Sickenhöhe, der zweiten Sicke höchstens 60%, insbesondere höchstens 50%, bevorzugt höchstens 40% der Höhe der ersten Sicke beträgt. Die Sickenhöhe der zweiten Sicke kann auch höchstens 35% der Höhe der ersten Sicke betragen. Die Sickenhöhe kann hier wie üblich als die Höhe bezeichnet werden, um welche sich die Sicke an höchsten Punkt ihres Sickendachs über der umliegenden Lage abhebt. Dabei kann vorgesehen sein, dass die Höhe der zweiten Sicke mindestens 5%, insbesondere mindestens 10%, bevorzugt mindestens 15% der Höhe der ersten Sicke beträgt. Die genannten Werte haben den Vorteil, dass, insbesondere in dem über eine Kombination der unterschiedlichen Werte definierten Bereich für die Höhe der zweiten Sicke, der gewünschte Unterschied zwischen den Steifigkeiten mit den genannten Vorteilen besonders gut zu realisieren ist, da die Sickenhöhe in der Produktion sehr genau und auf einfache Weise kontrollierbar ist.

Die Reduktion der Steifigkeit kann, wie bereits erwähnt, insbesondere über eine Reduktion der Prägetiefe der zweiten Sicke gegenüber der ersten Sicke erreicht werden. Hierbei kann es bevorzugt sein, die Höhe stärker zu reduzieren, als dies für die Reduktion der Steifigkeit bei gleichbleibender Breite erforderlich wäre, dies erlaubt es, die Breite der zweiten Sicke zu reduzieren. Hierdurch steht mehr Raum für den Abstand zwischen Sicke und nebengeordnetem Stopper zur Verfügung. In einer weiteren vorteilhaften Ausführungsform ist daher vorgesehen, dass eine Breite der zweiten Sicke höchsten 90%, insbesondere höchstens 80%, bevorzugt höchstens 70% der Breite der ersten Sicke beträgt.

In einer anderen vorteilhaften Ausführungsform ist vorgesehen, dass mindestens eine der Sickenlagen an einer zu der anderen Sickenlage weisenden Oberfläche eine Beschichtung aufweist. Das hat den Vorteil eines verbesserten Dichtverhaltens. Insbesondere kann die mindestens eine Sickenlage im Bereich der Sicke, dem Sickenbereich, eine Beschichtung aufweisen. Die andere Lage kann in ihrem korrespondierenden Bereich, der mit dem Sickenbereich der einen Lage in Anlage angeordnet ist, unbeschichtet sein. Insbesondere kann die zweite Lage die andere Lage sein, also zumindest einseitig zumindest bereichsweise unbeschichtet sein, bevorzugt zumindest im Bereich der Sicke. Die Sicke der zweiten Lage kann also im zur Anlage mit der Sicke der ersten Lage vorgesehenen Bereich unbeschichtet sein. Mit anderen Worten ist die Sicke der zweiten Lage an der der ersten Lage zugewandten Seite zumindest bereichsweise, bevorzugt im Bereich ihrer Sicke (dem Sickenbereich), blank oder unbeschichtet. Insbesondere kann auch genau eine der Lagen an der zur anderen Lage weisenden Oberfläche eine Beschichtung aufweisen.

In einer weiteren vorteilhaften Ausführungsform ist vorgesehen, dass eine (bevorzugt sickenlose) weitere Lage, welche jedoch einen oder mehrere Stopper aufweisen kann, entweder derart an der zweiten Lage angeordnet ist, dass die zweite Lage zwischen der ersten Lage und der weiteren Lage angeordnet ist oder bereichsweise zwischen erster und zweiter Lage angeordnet ist ohne zwischen den beiden Sicken angeordnet zu sein. Im letztgenannten Fall kann die bevorzugt ansonsten unstrukturierte Lage als solche den Stopper bilden. Grundsätzlich sind auch mehrere weitere Lagen möglich. Beispielsweise kann auch beidseits des Lagenpaars je eine der weiteren Lagen angeordnet sein. Die weiteren Lagen können unabhängig voneinander einen, mehrere oder keine Stopper aufweisen. Die weitere Lage kann auch als Teil eines Lagenpaares, also der Sickenlagen betrachtet werden. Entsprechend können, wie weiter unten auch spezifiziert, mehrere Lagenpaare in der Flachdichtung übereinander geschichtet sein. Dabei können jeweils zwei weitere Lagen bei entsprechender Gestaltung ihrer Sicken auch als weiteres Lagenpaar der Sickenlagen betrachtet werden. Entsprechend können die Lagenpaare auch als Lagenpakete bezeichnet werden. Auch dies führt zu einer weiteren Verbesserung des Langzeitdichtverhaltens.

In einer anderen vorteilhaften Ausführungsform ist vorgesehen, dass die erste Sicke und zweite Sicke Vollsicken sind. Alternativ können die erste und die zweite Sicke auch als Halbsicke ausgeführt sein. Gerade bei Vollsicken führt der beschriebene Unterschied zwischen den Steifigkeiten jedoch zu einer besonders vorteilhaften Anpassung der Elastizität mit dem gewünschten Langzeitverhalten.

In einer besonders vorteilhaften Ausführungsform ist dabei vorgesehen, dass die erste Sicke und die zweite Sicke mit ihren Sickenfüßen oder ihren Sickendächern, insbesondere ihren Sickenkämmen, in Anlage aneinander angeordnet sind. Diese Form der symmetrischen Anordnung führt zu einer besonders vorteilhaften durch die ungleichen Steifigkeiten bedingten (daher als asymmetrisch bezeichneten) Wechselwirkung zwischen den Sicken.

In einer besonders vorteilhaften Ausführungsform weist die zweite Lage den (oder einen der) Stopper auf. Es können auch weitere Stopper in der ersten Lage oder einer weiteren Lage vorgesehen sein. Es hat sich jedoch herausgestellt, dass gerade der Stopper in der zweiten Lage mit der reduzierten Steifigkeit besonders vorteilhaft für die Langlebigkeit ist.

In einer weiteren vorteilhaften Ausführungsform ist vorgesehen, dass die Flachdichtung zumindest zwei der beschriebenen Paare von Lagen aufweist, also zumindest zwei Lagenpaare. Insbesondere kann dabei eine zusätzliche Lage, welche nicht zu den jeweiligen Paaren gehört, zwischen den Lagenpaaren angeordnet sein. Diese zusätzliche Lage ist bevorzugt sickenlos, kann jedoch unabhängig von dem Vorhandensein einer Sicke einen Stopper aufweisen. Alternativ kann die Flachdichtung auch aus einem oder aus mehreren Paaren von Lagen bestehen. Die Kombination von mehreren Lagenpaaren führt hier zu einem besonders günstigen Dichtverhalten.

In einer weiteren vorteilhaften Ausführungsform ist vorgesehen, dass der mindestens eine Stopper radial benachbart zu einer der Sicken, also der Sicke der ersten Sickenlage oder der Sicke der zweiten Sickenlage angeordnet ist. Der Stopper kann also erneut auf der der Brennraum-Aussparung zugewandten Seite oder der der Brennraum-Aussparung abgewandten Seite angeordnet sein, oder auch beidseitig. Ist er in der weiteren oder zusätzlichen Lage ausgebildet, so kann seine Anordnung wie oben beschrieben durch seine Orthogonalprojektion auf die Ebene einer Sickenlage bestimmt werden. Ein eingelegter Ring oder eine eingelegte Brille, oder allgemein eine Schablone, welche zur Lagenebene der ersten Sickenlage oder zweiten Sickenlage versetzt parallel zu einem der Sickendächer verläuft und auf diese Weise die Pressung der Sicke erhöht, ist dabei bevorzugt nicht Teil der Flachdichtung. Insbesondere ist eine derartige eingelegte Schablone auch wenn sie gelegentlich als "Shim-Stopper" bezeichnet wird, nicht als Stopper im Sinne der Erfindung zu verstehen.

Die in der vorstehenden Beschreibung genannten Merkmale und Merkmalskombinationen, sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen oder abhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert. Dabei zeigen:
- Fig. 1: eine Draufsicht auf eine beispielhafte Zylinderkopfdichtung, deren Lagenebene in der Zeichenebene verläuft;
- Fig. 2: eine Schnittdarstellung eines Ausschnitts einer bekannten Zylinderkopfdichtung;
- Fign. 3 bis 10: Darstellungen von Ausschnitten unterschiedlicher Ausführungsbeispiele von Zylinderkopfdichtungen, mit jeweils einer perspektivischen Ansicht in Teil A und einer Schnittdarstellung B mit eingezeichneten Beschichtungen;
- Fig. 11: ein beispielhaftes Verformungs-Linienpressungs-Diagramm für ausgewählte Sickenvarianten.

In den Figuren werden gleiche oder funktionsgleiche Elemente mit den gleichen Bezugszeichen versehen.

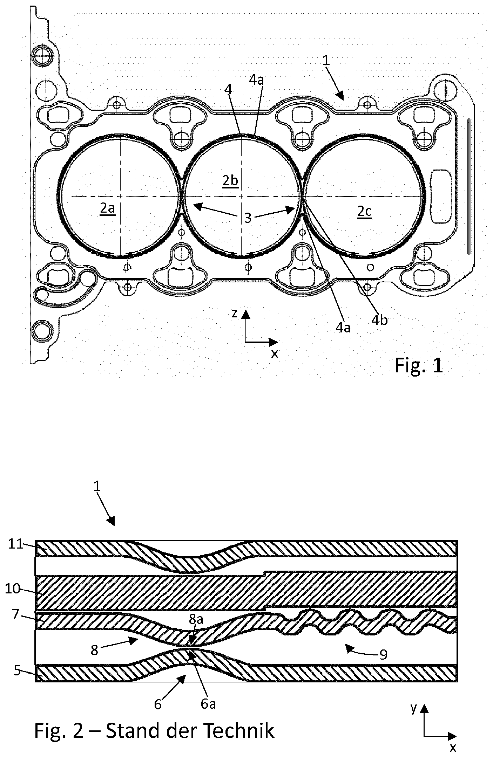

In Fig. 1 dient eine Zylinderkopfdichtung 1 dem Abdichten von beispielhaften drei Brennräumen. Entsprechend sind im gezeigten Beispiel drei Brennraum-Aussparungen 2a, 2b, 2c in der Zylinderkopfdichtung 1 vorhanden. Dabei sind die Brennraum-Aussparungen 2a, 2b, 2c nur durch jeweilige schmale Stegbereiche 3 der Zylinderkopfdichtung 1 voneinander getrennt. In einem Sickenbereich 4 verlaufen jeweilige Sicken 6, 8 (Figs. 2-10), die in den weiteren Figuren detaillierter dargestellt sind, umlaufend um die genannten Brennraum-Aussparungen 2a, 2b, 2c. Der Sickenbereich 4 hat vorliegend eine brillenförmige Gestalt mit drei ineinander übergehenden Kreisen. Die den Brennräumen abgewandten Sickenschenkel 4a umgehen die Stegbereiche 3, die den Brennräumen zugewandten Sickenschenkel 4b werden durch den jeweiligen Stegbereich 3 geführt. Die Haupterstreckungsebene verläuft in der Zeichenebene, der x-z-Ebene.

In Fig. 2 ist nun eine Schnittansicht eines Ausschnitts einer aus dem Stand der Technik bekannten Zylinderkopfdichtung 1 in dem Sickenbereich 4 dargestellt. Die Schnittebene ist hier und in den folgenden Figuren beispielhaft als x-y-Ebene angegeben, grundsätzlich können die gezeigten Schnittansichten auch anderen senkrecht zur x-z-Ebene verlaufenden Schnittebenen zugeordnet werden.

Die gezeigte Zylinderkopfdichtung 1 weist eine erste metallische Lage 5 mit einer ersten Sicke 6 sowie eine zweite metallische Lage 7 mit einer zweiten Sicke 8 auf. Erste Sicke 6 und zweite Sicke 8 sind dabei in Anlage aneinander angeordnet und berühren sich mit einem jeweiligen Sickendach 6a, 8a. Der kleine Spalt zwischen den beiden Sickendächern 6a, 8a ist hier und in den folgenden Schnittansichten nur zur besseren Übersicht eingezeichnet. Allerdings können die Sickendächer 6a, 8a auch tatsächlich beabstandet sein und sich nur bei bestimmungsgemäßem Gebrauch berühren, also bei Kompression oder bei Verpressung senkrecht zur Haupterstreckungsebene. Die zweite Lage 7 weist hier auch einen Stopper 9 auf. Zusätzlich hat die Zylinderkopfdichtung 1 noch eine weitere Lage 10 und eine zusätzliche Lage 11, wobei die zusätzliche Lage 11 vorliegend auch eine zusätzliche Sicke aufweist.

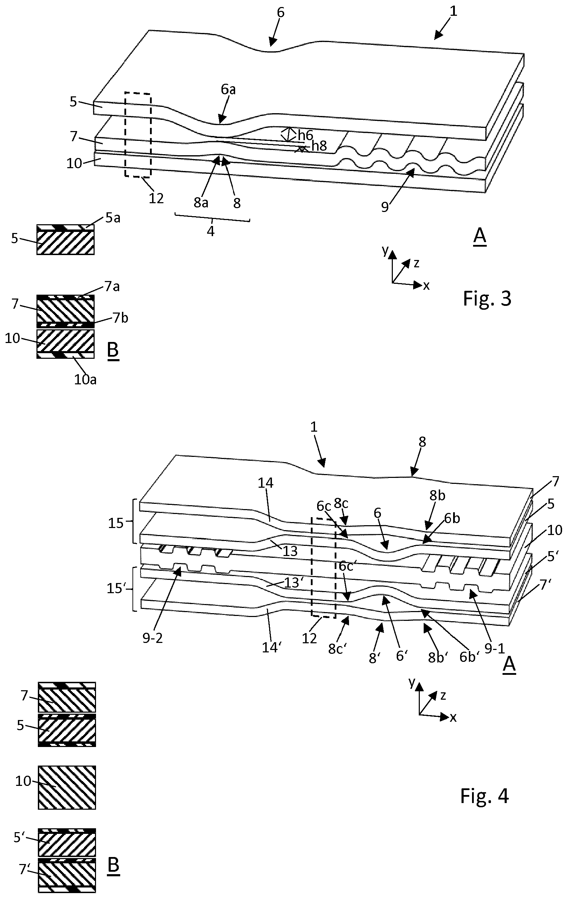

In Fig. 3A ist eine perspektivische Ansicht eines Ausschnitts eines Sickenbereichs 4 einer beispielhaften Zylinderkopfdichtung 1 dargestellt. Die dort dargestellte Zylinderkopfdichtung 1 weist ebenfalls eine erste Sickenlage 5 mit einer ersten Sicke 6 auf sowie eine zweite Sickenlage 7 mit einer zweiten Sicke 8. Zusätzlich weist die zweite Sickenlage 7 hier auch einen Stopper 9 auf, welcher in diesem Beispiel radial (vorliegend in x-Richtung) benachbart zur zweiten Sicke 8 angeordnet ist. Die zweite Sickenlage 7 ist dabei zwischen der ersten Sickenlage 5 und einer weiteren Lage 10, die vorliegend als glatte Lage oder Glattlage, also ohne Stopper oder Sicken, ausgeführt ist, angeordnet.

Wieder sind die beiden Sickendächer 6a, 8a aneinander anliegend angeordnet, wobei hier wie auch in den folgenden Darstellungen für eine bessere Übersichtlichkeit die verschiedenen Lagen jeweils in y-Richtung beabstandet gezeichnet sind. Hier wie in den folgenden Ausführungsbeispielen ist die Steifigkeit der zweiten Sicke 8 höchstens 60% der Steifigkeit der ersten Sicke 6. Im gezeigten Beispiel hat die zweite Sicke 8 um dies zu realisieren auch eine Sickenhöhe h8, welche weniger als 60% der Sickenhöhe h6 der ersten Sicke beträgt.

Der Fig. 3B, welche ein Schnittdetail entsprechend dem Kästchen 12 in Fig. 3A darstellt, ist die Beschichtung der jeweiligen Lagen 5, 7, 10 der Zylinderkopfdichtung 1 zu entnehmen. Dies gilt analog auch für die Teilfiguren 4B bis 11B.

Im vorliegenden Beispiel zeigt die Fig. 3B somit, dass die erste Sickenlage 5 einseitig beschichtet ist, nämlich an der in positiver y-Richtung orientierten Oberfläche eine Beschichtung 5a aufweist. Die zweite Sickenlage 7 ist vorliegend beidseitig beschichtet und weist eine Beschichtung 7a auf ihrer in positiver y-Richtung orientierten Oberfläche und eine Beschichtung 7b auf ihrer in negativer y-Richtung orientierten Oberfläche auf. Die weitere Lage 10 wiederum ist vorliegend ebenfalls nur einseitig beschichtet, und weist im gezeigten Beispiel an ihrer in negativer y-Richtung orientierten Oberfläche eine Beschichtung 10a auf.

Im Folgenden werden bei Erläuterungen der jeweiligen Teilfiguren in positiver y-Richtung orientierte Oberflächen auch als obere Oberflächen, und in negative y-Richtung orientierte Oberflächen auch als untere Oberflächen bezeichnet. Die Teilfiguren 3B bis 10B entsprechen jeweils dem Kästchen 12 der zugehörigen Teilfigur 3A bis 10A. Die in den Teilfiguren 3B bis 10B dargestellten Beschichtungen können sich insbesondere bereichsweise über die jeweiligen Lagen 5, 5', 7, 7', 10, 11 erstrecken, bevorzugt über die Sickenbereiche 4 und damit die Sicken 6, 6', 8, 8' der jeweiligen Lagen 5, 5', 7, 7'. Der Übersichtlichkeit halber sind die Beschichtungen jeweils in einem zu den Sickenbereichen 4 in radialer Richtung versetzten Bereich dargestellt. Es wäre jedoch auch möglich, dass die Beschichtungen ausschließlich in den Sickenbereichen 4 entsprechend den Teilfiguren 3B bis 10B vorgesehen sind, nicht aber in den von den Sickenbereichen mehr als eine einfache Breite des Sickenbereiches (von Sickenfuß zu Sickenfuß) entfernten Bereichen.

In Fig. 4A ist ein weiteres Ausführungsbeispiel für eine Zylinderkopfdichtung 1 dargestellt. Dieses weist zwei Paare 15, 15' von Sickenlagen 5, 5', 7, 7' auf.

Das eine Lagenpaar 15 umfasst vorliegend wieder eine erste Lage 5 mit einer ersten Sicke 6 und eine zweite Lage 7 mit einer zweiten Sicke 8. Vorliegend sind dabei jeweils die Sickenfüße 6b, 6c, 8b, 8c, in Anlage aneinander angeordnet. Die Sickendächer von erster und zweiter Lage 5, 7 sind somit entgegengesetzt orientiert. Zusätzlich weist die ersten Lagen 5 eine Halbsicke 13 sowie die zweite Lage 7 eine Halbsicke 14 auf, welche in der Lagenebene, also der x-z-Ebene beabstandet zu der ersten Sicke 6 und der zweiten Sicke 8 angeordnet sind. Diese Halbsicken 13, 14 liegen dabei vorliegend wie die erste und zweite Sicken 6, 8 in y-Richtung übereinander. Das andere Lagenpaar 15' mit der ersten Lage 5' und der zweiten Lage 7' ist identisch aufgebaut, wobei die Sicken 6, 6', 8, 8' im gezeigten Beispiel in y-Richtung übereinander angeordnet sind.

Zwischen den beiden Lagenpaaren 15, 15' ist vorliegend die weitere Lage 10 angeordnet. Diese verfügt im gezeigten Beispiel über zwei Stopper 9, wobei der erste Stopper 9-1 vorliegend in x-Richtung versetzt zu den ersten und zweiten Sicken 6, 6', 8, 8' angeordnet ist, und der zweite Stopper 9-2 zwischen den Halbsicken 13, 13. Zusätzlich sind in vorliegendem Beispiel die beiden Lagenpaare 15, 15' entgegengesetzt orientiert, so dass die beiden ersten Lagen 5, 7 zwischen den beiden zweiten Lagen 7, 7' angeordnet sind. Alternativ könnten auch die beiden zweiten Lagen 7, 7' zwischen den beiden ersten Lagen 5, 5' angeordnet sein.

Aus Fig. 4B geht hervor, dass im gezeigten Beispiel die weitere Lage 10 eine blanke, unbeschichtete Lage ist, die ersten Lage 5 und zweite Lage 7' jeweils zumindest bereichsweise beidseitig beschichtete Lagen sind, und die erste Lage 5' und die zweite Lage 7 jeweils zumindest bereichsweise einseitig an ihrer Oberseite beschichtete Lagen sind.

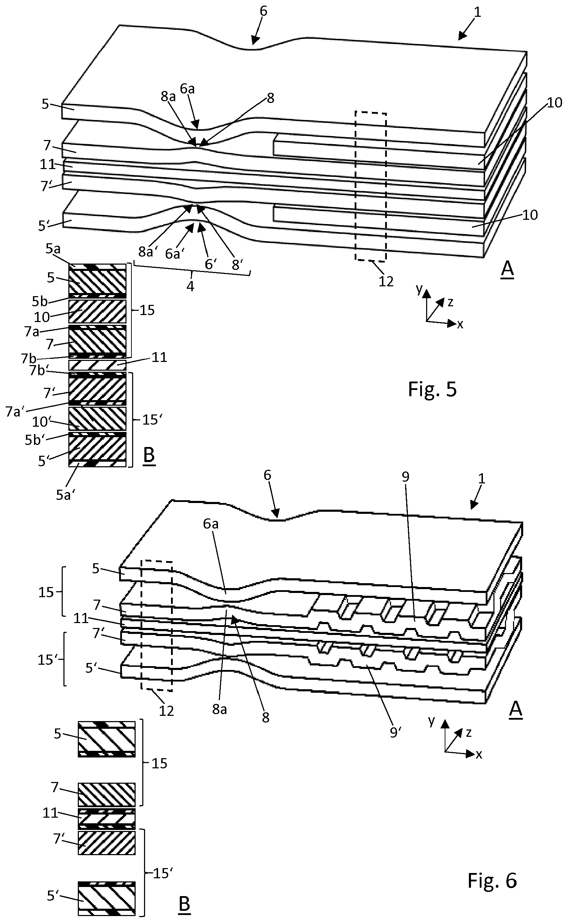

In dem in Fig. 5A ausschnittsweise gezeigten Ausführungsbeispiel umfasst die Zylinderkopfdichtung 1 nun wiederum zwei Lagenpaare 15, 15' mit einer zwischen diesen angeordneten zusätzlichen Lage 11. Im Gegensatz zu dem Ausführungsbeispiel von Fig. 4 sind erste und zweite Lage 5, 5', 7, 7' der jeweiligen Paare 15, 15' nun mit den jeweiligen Sickendächern 6a, 8a, 6a', 8a' in Anlage aneinander angeordnet. Die Sickendächer 6a, 8a, 6a', 8a', die konvex geformten Oberflächen der jeweiligen Sicken 6, 8, 6', 8' eines Paares 15, 15' sind somit jeweils zueinander hin orientiert. Zwischen erster Lage 5, 5' und zweiter Lage 7, 7' der jeweiligen Paare 15, 15' ist dabei die weitere Lage 10 bereichsweise angeordnet, ohne jedoch zwischen den jeweiligen Sicken 6, 8 und 6', 8' angeordnet zu sein. Die weitere Lage 10, 10' spart also vorliegend einen jeweiligen Sickenbereich 4 aus, um zwischen erster Lage 5, 5' und zweiter Lage 7, 7' angeordnet sein zu können und dabei, wenn sie wie im vorliegenden Beispiel brennraumseitig angeordnet sind, einen ringförmigen Stopper zu bilden. Die ringförmigen Lagen 10, 10' verhindern dabei nicht, dass die ersten Sicken 6, 6' in Anlage zu den zweiten Sicken 8, 8' angeordnet sind.

Aus Fig. 5B wird hier wieder das Vorhandensein und Nichtvorhandensein der jeweiligen Beschichtungen ersichtlich. So sind vorliegend die weiteren Lagen 10, 10' sowie die zusätzliche Lage 11 zumindest bereichsweise unbeschichtet oder blank, die ersten Lagen 5, 5' und die zweiten Lagen 7, 7' jeweils zumindest bereichsweise beidseitig beschichtet.

In Fig. 6A ist ein weiteres Ausführungsbeispiel dargestellt, welches bis auf die Beschichtungen und die nicht vorhandenen weiteren Lagen 10, 10' dem in Fig. 5A gezeigten Beispiel entspricht. Des Weiteren weisen die zweiten Lagen 7, 7' hier auch jeweilige Stopper 9, 9' auf, welche in der Lagenebene versetzt zu den Sicken 6, 8 angeordnet sind. Auch hier ist die Zwischenlage 11 ohne Stopper oder Sicken ausgeführt.

Aus Fig. 6B ist ersichtlich, dass vorliegend die ersten Lagen 5, 5' zumindest bereichsweise beidseitig beschichtet sind wie auch die zusätzliche Lage 11, hingegen die zweiten Lagen 7, 7' zumindest bereichsweise unbeschichtet sind.

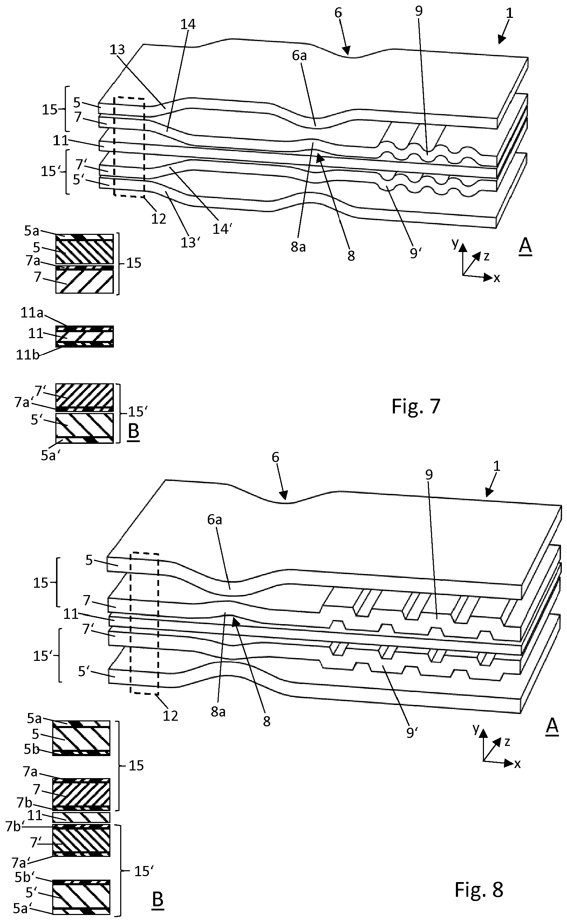

In Fig. 7A ist ein weiteres Ausführungsbeispiel mit zwei Lagenpaaren 15, 15' dargestellt, bei welchem die jeweiligen ersten Lagen 5, 5' und zweiten Lagen 7, 7' ebenfalls eine jeweilige Halbsicke 13, 13', 14, 14' aufweisen. Die Halbsicken 13, 13', 14, 14' sind in y-Richtung übereinander angeordnet. Die beiden Lagenpaare 15, 15' sind wieder spiegelsymmetrisch bezüglich der weiteren Lage 11 angeordnet, also beide zweiten Lagen 7, 7' zwischen den ersten Lagen 5, 5'. Wie auch in den anderen Beispielen sind die Sicken 6, 6', 8, 8' der beiden Paare 15, 15' hier beispielhaft in y-Richtung übereinander angeordnet. Vorliegend kommen dabei die entsprechenden Sickendächer 6a, 8a bei bestimmungsgemäßem Gebrauch, also bei Verpressen der Lagen 5, 7 des ersten Lagenpaares 15 in Anlage miteinander. Gleiches gilt für die Lagen 5', 7' des zweiten Lagenpaares 15'.

Wie aus Fig. 7B ersichtlich, ist vorliegend die Zwischenlage 11 zumindest bereichsweise beidseitig beschichtet. Die Lagen 5, 5', 7, 7' sind dabei jeweils auf ihrer zur Zwischenlage 11 hin orientierten Oberfläche zumindest bereichsweise unbeschichtet und auf ihrer von der Zwischenlage 11 fort orientierten Oberfläche zumindest bereichsweise beschichtet.

In Fig. 8A ist eine Zylinderkopfdichtung 1 dargestellt, die bis auf die Beschichtungen und die Ausführung des Stoppers (hier konzentrisch umlaufende Prägungen, in Fig. 6A näherungsweise karoförmige umlaufende Prägungen) der Zylinderkopfdichtung 1 von Fig. 6A entspricht. Wie in Fig. 8B gezeigt, ist jedoch nunmehr die Zwischenlage 11 zumindest bereichsweise unbeschichtet und die zweiten Lagen 7, 7' beidseitig zumindest bereichsweise beschichtet.

Die ersten Lagen 5, 5' sind wie in dem Beispiel von Fig. 6B beidseitig zumindest bereichsweise beschichtet.

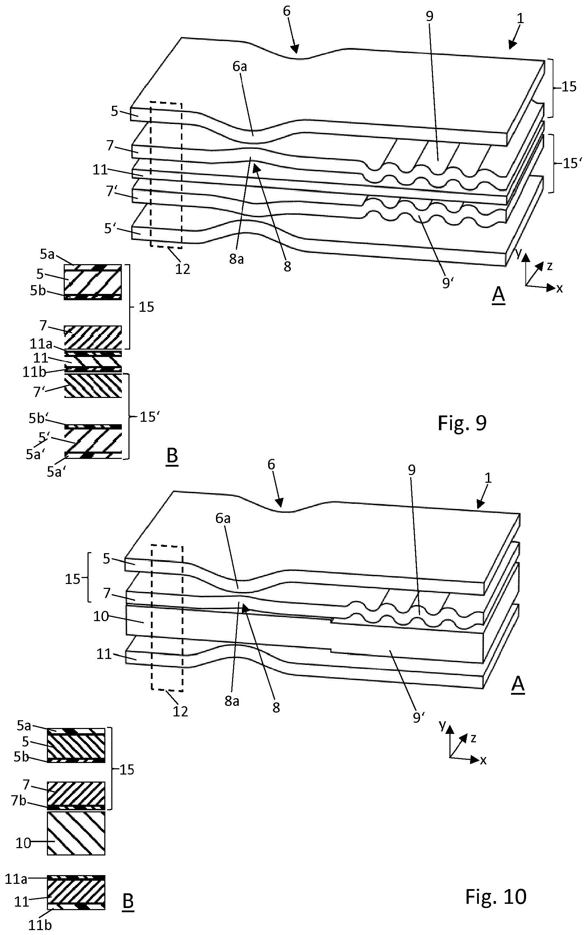

In den Fign. 9A und 9B ist das Beispiel aus den Fign. 6A und 6B mit einem anderen Stopper 9, 9' gezeigt.

In Fig. 10A ist ein Ausschnitt einer weiteren beispielhaften Zylinderkopfdichtung 1 mit einem einzigen Lagenpaar 15, bestehend aus der ersten Lage 5 und der zweiten Lage 7 dargestellt. Wieder kommen hier die Sickendächer 6a, 8a in Anlage zueinander, und die zweite Lage 7 weist einen Stopper 9 auf. Die von der ersten Lage 5 am weitesten entfernte zusätzliche Lage 11 der Zylinderkopfdichtung 1 weist dabei ebenfalls eine Sicke auf und ist vorliegend an einer weiteren Lage 10 angeordnet, sodass die weitere Lage 10 zwischen der zusätzlichen Lage 11 und der zweiten Lage 7 angeordnet ist und die zweite Lage 7 zwischen der weiteren Lage 10 und der ersten Lage 5. Die drei Sicken sind dabei vorliegend wieder in y-Richtung übereinander angeordnet.

Wie in Fig. 10B ersichtlich, ist dabei die zusätzliche Lage 11 zumindest bereichsweise beidseitig beschichtet, die weitere Lage 10 hingegen zumindest bereichsweise blank. Auch die erste Lage 5 ist beidseitig zumindest bereichsweise beschichtet, wohingegen die zweite Lage 7 im gezeigten Beispiel nur zumindest bereichsweise einseitig, und zwar an der der weiteren Lage zugewandten Oberfläche beschichteten Seite beschichtet ist.

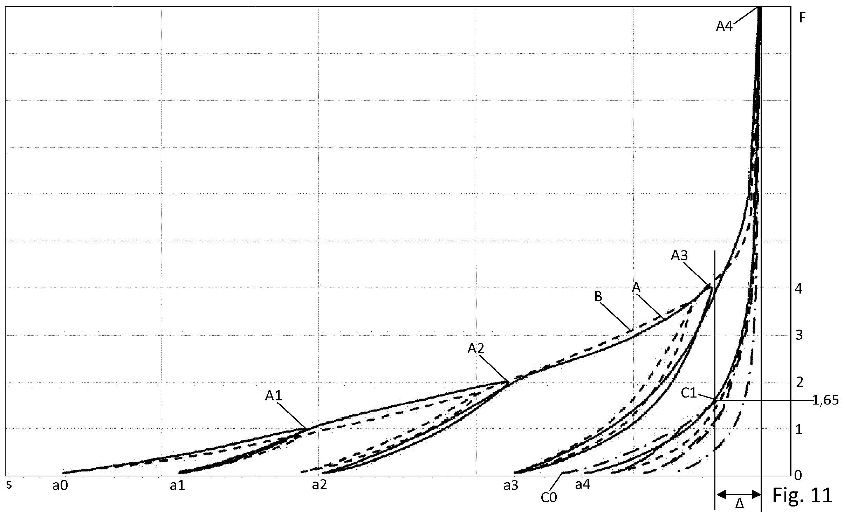

In Fig. 11 ist ein beispielhaftes Verformungs-Linienpressungs-Diagramm für ausgewählte Sickenvarianten dargestellt. Dabei ist die Linienpressung, welche als Kraft F in N/mm angegeben werden kann, über einer Verformung, welche als Weg s wiederum in mm angegeben werden kann, qualitativ für unterschiedliche Sicken in willkürlichen Einheiten dargestellt. Die Verformung ist in der x-Achse, die Linienpressung in der y-Achse aufgetragen. Die durchgezogene Kurve A beschreibt dabei den Verlauf für eine Sicke in einer beschichteten Lage. Die gestrichelte Kurve B ist für eine Sicke in einer unbeschichteten Lage charakteristisch, welche ebenfalls entsprechend dem Stand der Technik ausgebildet ist. Die strichpunktierte Kurve C wiederum charakterisiert den Zusammenhang von Verformung und Linienpressung einer wesentlich weicheren Sicke, deren Steifigkeit weniger als 60% der anderen beiden Sicken beträgt.

So geht vorliegend aus der Kurve A hervor, dass sich die entsprechende Sicke in der beschichteten Lage, ausgehend von einer ursprünglichen Sickenhöhe, welche der Verformung a0 entspricht, bei zunehmender Belastung mit bis zu einer Pressung mit dem Wert "1" willkürlicher Einheit entlang des Belastungsastes (also in der Figur nach rechts) der Kurve A bis zu dem Punkt A1 verformt. Wird die Belastung nun wieder reduziert, senkt sich die Sicke entlang des Entlastungsastes (also in der Figur nach links) der Kurve A wieder zurück auf eine von dem Ausgangswert a0 verschiedene Verformung a1. Der Differenzwert zwischen a0 und a1 entspricht somit einer plastischen Verformung der Sicke bei einer einmaligen Pressung in Höhe von "1", beispielsweise einem Wert von 50 N/mm. Entsprechend wird bei doppelt so großer Pressung oder Belastung in Höhe von "2" die Sicke durch den Zustand im Punkt A2 beschrieben und formt sich bei Entlastung wieder auf die der Verformung a2 entsprechende Höhe. Analoges gilt für eine Belastung in Höhe von "4" mit dem Punkt A3 sowie der Rückverformung der Sicke auf eine dem Punkt a3 entsprechenden Höhe bei nachfolgender Entlastung. Bei einer vollständigen Komprimierung der Sicke, wie sie beispielsweise in dem Punkt A4 vorliegt, erfolgt eine Rückformung auf die dem Punkt a4 entsprechende Höhe der Sicke. Das Verhalten der Sicke in der blanken Lage, wie es durch Kurve B beschrieben ist, folgt hier ähnlichen Charakteristiken.

Deutlich verschieden ist jedoch das Verhalten der mit Kurve C charakterisierten weicheren Sicke, deren initiale, durch den Punkt C0 repräsentierte Sickenhöhe im Vergleich zur initialen, durch den Punkt a0 repräsentierten Sickenhöhe der Sicke in der beschichteten Lage, Kurve A, deutlich geringer ist. Im gezeigten Beispiel repräsentiert der Wert C0 rund ein Drittel der Höhe des Wertes a0. Der Unterschied in der Steifigkeit der in Kurve A und in Kurve C charakterisierten Sicken kann nun beispielsweise quantifiziert werden, indem die Kraft (N) über die betreffende Länge (mm) der Sicke gemessen wird, welche erforderlich ist, um die jeweilige Sicke in eine vorgegebene Verformung (mm), also vorgegebene Höhe, das heißt einen vorgegebenen Abstand Δ vor der vollständigen Verpressung weiter zu verpressen.

Im gezeigten Beispiel entsprechen diesem Messen die Punkte C1 und A3, welche bevorzugt ausschließlich über eine durchgängig steigende Belastung oder Pressung erreicht werden. Somit ist im gezeigten Beispiel eine Pressung von "4" erforderlich, um die Sicke der Kurve A von der Verformung a0 auf die vorgegebene Resthöhe, beispielsweise eine Höhe von Δ=30 µm zusammenzudrücken. Um die durch die Kurve C charakterisierte Sicke auf diesen Wert entsprechend dem Punkt C1 zusammenzudrücken, ist hingegen nur eine Pressung von beispielsweise "1,65" erforderlich. Daher beträgt die Steifigkeit der weicheren Sicke vorliegend 41,25% der Steifigkeit der steiferen Sicke.

## Patentansprüche

1. Zylinderkopfdichtung (1) zum Abdichten eines Brennraums mit zumindest einem Paar (15, 15') von Lagen (5, 5', 7, 7'), wobei jedes Paar (15, 15') von Lagen (5, 5', 7, 7')
- eine erste Lage (5, 5') mit einer ersten Sicke (6, 6'), und
- eine zweite Lage (7, 7') mit einer zweiten Sicke (8, 8') aufweist;
wobei die erste Sicke (6, 6') und die zweite Sicke (8, 8') in Anlage aneinander angeordnet sind und beide Sicken (6, 6', 8, 8') zumindest abschnittsweise umlaufend um eine Brennraum-Aussparung (2a, 2b, 2c) der Zylinderkopfdichtung (1) verlaufen sowie zumindest eine der Lagen (5, 5', 7, 7') oder eine weitere Lage (10) der Zylinderkopfdichtung (1) einen Stopper (9, 9') aufweist;
**dadurch gekennzeichnet, dass**
die Steifigkeit der zweiten Sicke (8, 8') höchstens 60% der Steifigkeit der ersten Sicke (6, 6') beträgt.

2. Zylinderkopfdichtung (1) nach Schutzanspruch 1,
**dadurch gekennzeichnet, dass**
die Steifigkeit der zweiten Sicke (8, 8') höchstens 50%, insbesondere höchstens 40%, bevorzugt höchstens 35% der Steifigkeit der ersten Sicke (6, 6') beträgt.

3. Zylinderkopfdichtung (1) nach Schutzanspruch 2,
**dadurch gekennzeichnet, dass**
die Steifigkeit der zweiten Sicke (8, 8') mindestens 5%, insbesondere mindestens 10%, bevorzugt mindestens 15% der Steifigkeit der ersten Sicke (6, 6') beträgt.

4. Zylinderkopfdichtung (1) nach einem der vorhergehenden Schutzansprüche,
**dadurch gekennzeichnet, dass**
eine Höhe der zweiten Sicke (8, 8') höchstens 60%, insbesondere höchstens 50%, bevorzugt höchstens 40% der Höhe der ersten Sicke (6, 6') beträgt.

5. Zylinderkopfdichtung (1) nach Schutzanspruch 4,
**dadurch gekennzeichnet, dass**
die Höhe der zweiten Sicke (8, 8') mindestens 5%, insbesondere mindestens 10%, bevorzugt mindestens 15% der Höhe der ersten Sicke (6, 6') beträgt.

6. Zylinderkopfdichtung (1) nach einem der vorhergehenden Schutzansprüche,
**dadurch gekennzeichnet, dass**
eine Breite der zweiten Sicke (8, 8') höchstens 90%, insbesondere höchstens 80%, bevorzugt höchstens 70% der Breite der ersten Sicke (6, 6') beträgt.

7. Zylinderkopfdichtung (1) nach einem der vorhergehenden Schutzansprüche,
**dadurch gekennzeichnet, dass**
mindestens eine der Lagen (5, 5', 7, 7') an einer zu der anderen Lage (7, 7', 5, 5') weisenden Oberfläche eine Beschichtung (5a, 5b, 7a, 7b, 5a', 5b', 7a', 7b') aufweist, insbesondere im Bereich der Sicke (6, 6', 8, 8') der einen Lage (5, 5', 7, 7').

8. Zylinderkopfdichtung (1) nach einem der vorhergehenden Schutzansprüche,
**gekennzeichnet durch**
eine weitere Lage (10), welche bereichsweise zwischen erster und zweiter Lage (5, 5', 7, 7') angeordnet ist ohne zwischen den beiden Sicken (6, 6', 8, 8') angeordnet zu sein oder welche an der zweiten Lage (7, 7') derart angeordnet ist, dass die zweite Lage (7, 7') zwischen der ersten Lage (5, 5') und der weiteren Lage (10) angeordnet ist.

9. Zylinderkopfdichtung (1) nach einem der vorhergehenden Schutzansprüche,
**dadurch gekennzeichnet, dass**
erste Sicke (6, 6') und zweite Sicke (8, 8') jeweils Vollsicken sind.

10. Zylinderkopfdichtung (1) nach einem der vorhergehenden Schutzansprüche,
**dadurch gekennzeichnet, dass**
die erste Sicke (6, 6') und die zweite Sicke (8, 8') mit ihren Sickenfüßen (6b, 6c, 6b', 6c', 8b, 8c, 8b', 8c') oder ihren Sickendächern (6a, 6a', 8a, 8a') in Anlage aneinander angeordnet sind.

11. Zylinderkopfdichtung (1) nach einem der vorhergehenden Schutzansprüche,
**dadurch gekennzeichnet, dass**
die zweite Lage (7, 7') den Stopper (9, 9') aufweist.

12. Zylinderkopfdichtung (1) nach einem der vorhergehenden Schutzansprüche,
**gekennzeichnet durch**
zwei der beschriebenen Paare (15, 15') von Lagen (5, 5', 7, 7'), wobei insbesondere eine zusätzliche Lage (11) zwischen den Paaren (15, 15') angeordnet ist.

13. Zylinderkopfdichtung (1) nach einem der vorhergehenden Schutzansprüche,
**dadurch gekennzeichnet, dass**
die Zylinderkopfdichtung (1) aus einem oder aus mehreren Paaren (15, 15') von Lagen (5, 5', 7, 7') besteht.

14. Zylinderkopfdichtung (1) nach einem der vorhergehenden Schutzansprüche, **dadurch gekennzeichnet, dass** der mindestens eine Stopper (9, 9') radial benachbart zu einer der Sicken (6, 6', 8, 8') angeordnet ist.

## Claims

1. A cylinder head gasket (1) for sealing a combustion chamber having at least one pair (15, 15') of layers (5, 5', 7, 7'), each pair (15, 15') of layers (5, 5', 7, 7') having
- a first layer (5, 5') having a first bead (6, 6'), and
- a second layer (7, 7') having a second bead (8, 8');
the first bead (6, 6') and the second bead (8, 8') being arranged in contact with one another and both beads (6, 6', 8, 8') at least in sections running circumferentially around a combustion chamber recess (2a, 2b, 2c) of the cylinder head gasket (1) and at least one of the layers (5, 5', 7, 7') or a further layer (10) of the cylinder head gasket (1) having a stopper (9, 9');
**characterized in that**
the rigidity of the second bead (8, 8') is at most 60% of the rigidity of the first bead (6, 6').

2. The cylinder head gasket (1) according to claim 1,
**characterized in that**
the rigidity of the second bead (8, 8') is at most 50%, particularly at most 40%, preferably at most 35% of the rigidity of the first bead (6, 6').

3. The cylinder head gasket (1) according to claim 2,
**characterized in that**
the rigidity of the second bead (8, 8') is at least 5%, particularly at least 10%, preferably at least 15% of the rigidity of the first bead (6, 6').

4. The cylinder head gasket (1) according to any one of the preceding claims,
**characterized in that**
a height of the second bead (8, 8') is at most 60%, particularly at most 50%, preferably at most 40% of the height of the first bead (6, 6').

5. The cylinder head gasket (1) according to claim 4,
**characterized in that**
the height of the second bead (8, 8') is at least 5%, particularly at least 10%, preferably at least 15% of the height of the first bead (6, 6').

6. The cylinder head gasket (1) according to any one of the preceding claims,
**characterized in that**
a width of the second bead (8, 8') is at most 90%, particularly at most 80%, preferably at most 70% of the width of the first bead (6, 6').

7. The cylinder head gasket (1) according to any one of the preceding claims,
**characterized in that**
at least one of the layers (5, 5', 7, 7') has a coating (5a, 5b, 7a, 7b, 5a', 5b', 7a', 7b') on a surface facing the other layer (7, 7', 5, 5'), particularly in the region of the bead (6, 6', 8, 8') of the one layer (5, 5', 7, 7').

8. The cylinder head gasket (1) according to any one of the preceding claims,
**characterized by**
a further layer (10), which is arranged in regions between the first and second layer (5, 5', 7, 7') without being arranged between the two beads (6, 6', 8, 8') or which is arranged on the second layer (7, 7') such that the second layer (7, 7') is arranged between the first layer (5, 5') and the further layer (10).

9. The cylinder head gasket (1) according to any one of the preceding claims,
**characterized in that**
first bead (6, 6') and second bead (8, 8') are each full beads.

10. The cylinder head gasket (1) according to any one of the preceding claims,
**characterized in that**
the first bead (6, 6') and the second bead (8, 8') with their bead bases (6b, 6c, 6b', 6c', 8b, 8c, 8b', 8c') or their bead tops (6a, 6a', 8a, 8a') are arranged in contact with one another.

11. The cylinder head gasket (1) according to any one of the preceding claims,
**characterized in that**
the second layer (7, 7') has the stopper (9, 9').

12. The cylinder head gasket (1) according to any one of the preceding claims,
**characterized by**
two of the described pairs (15, 15') of layers (5, 5', 7, 7'), wherein particularly an additional layer (11) is arranged between the pairs (15, 15').

13. The cylinder head gasket (1) according to any one of the preceding claims,
**characterized in that**
the cylinder head gasket (1) consists of one or more pairs (15, 15') of layers (5, 5', 7, 7').

14. The cylinder head gasket (1) according to any one of the preceding claims, **characterized in that** the at least one stopper (9, 9') is arranged radially adjacent to one of the beads (6, 6', 8, 8').

## Revendications

1. Joint de culasse (1) destiné à assurer l'étanchéité d'une chambre de combustion et comprenant au moins une paire (15, 15') de couches (5, 5', 7, 7'), dans lequel chaque paire (15, 15') de couches (5, 5', 7, 7') présente
- une première couche (5, 5') comportant une première ondulation (6, 6'), et
- une deuxième couche (7, 7') comportant une deuxième ondulation (8, 8') ;
dans lequel la première ondulation (6, 6') et la deuxième ondulation (8, 8') sont disposées l'une contre l'autre, les deux ondulations (6, 6', 8, 8') s'étendent au moins par tronçons sur le pourtour d'un orifice de chambre de combustion (2a, 2b, 2c) du joint de culasse (1) et au moins une des couches (5, 5', 7, 7') ou une couche supplémentaire (10) du joint de culasse (1) comprend un dispositif d'arrêt (9, 9') ;
**caractérisé en ce que**
la rigidité de la deuxième ondulation (8, 8') équivaut au maximum à 60 % de la rigidité de la première ondulation (6, 6').

2. Joint de culasse (1) selon la revendication 1,
**caractérisé en ce que**
la rigidité de la deuxième ondulation (8, 8') équivaut au maximum à 50 %, en particulier à 40 % et de préférence à 35 % de la rigidité de la première ondulation (6, 6').

3. Joint de culasse (1) selon la revendication 2,
**caractérisé en ce que**
la rigidité de la deuxième ondulation (8, 8') équivaut au minimum à 5 %, en particulier à 10 % et de préférence à 15 % de la rigidité de la première ondulation (6, 6').

4. Joint de culasse (1) selon l'une des revendications précédentes,
**caractérisé en ce qu'**une
hauteur de la deuxième ondulation (8, 8') équivaut au maximum à 60 %, en particulier à 50 % et de préférence à 40 % de la hauteur de la première ondulation (6, 6').

5. Joint de culasse (1) selon la revendication 4,
**caractérisé en ce que**
la hauteur de la deuxième ondulation (8, 8') équivaut au minimum à 5 %, en particulier à 10 % et de préférence à 15 % de la hauteur de la première ondulation (6, 6').

6. Joint de culasse (1) selon l'une des revendications précédentes,
**caractérisé en ce qu'**une
largeur de la deuxième ondulation (8, 8') équivaut au maximum à 90 %, en particulier à 80 % et de préférence à 70 % de la largeur de la première ondulation (6, 6').

7. Joint de culasse (1) selon l'une des revendications précédentes,
**caractérisé en ce qu'**au
moins une des couches (5, 5', 7, 7') présente un revêtement (5a, 5b, 7a, 7b, 5a', 5b', 7a', 7b') sur une surface tournée vers l'autre couche (7, 7', 5, 5'), en particulier dans la zone de l'ondulation (6, 6', 8, 8') de l'une des couches (5, 5', 7, 7').

8. Joint de culasse (1) selon l'une des revendications précédentes,
**caractérisé par**
une couche supplémentaire (10) qui est disposée par endroits entre la première et la deuxième couche (5, 5', 7, 7') sans être disposée entre les deux ondulations (6, 6', 8, 8') ou qui est disposée sur la deuxième couche (7, 7') de telle sorte que la deuxième couche (7, 7') est disposée entre la première couche (5, 5') et la couche supplémentaire (10).

9. Joint de culasse (1) selon l'une des revendications précédentes,
**caractérisé en ce que**
la première ondulation (6, 6') et la deuxième ondulation (8, 8') sont chacune des ondulations pleines.

10. Joint de culasse (1) selon l'une des revendications précédentes,
**caractérisé en ce que**
la première ondulation (6, 6') et la deuxième ondulation (8, 8'), avec leurs bases (6b, 6c, 6b', 6c', 8b, 8c, 8b', 8c') ou leurs crêtes (6a, 6a', 8a, 8a') respectives, sont disposées l'une contre l'autre.

11. Joint de culasse (1) selon l'une des revendications précédentes,
**caractérisé en ce que**
la deuxième couche (7, 7') comporte le dispositif d'arrêt (9, 9').

12. Joint de culasse (1) selon l'une des revendications précédentes,
**caractérisé par**
deux des paires (15, 15') de couches (5, 5', 7, 7') décrites, dans lequel, en particulier, une couche supplémentaire (11) est disposée entre les paires (15, 15').

13. Joint de culasse (1) selon l'une des revendications précédentes,
**caractérisé en ce que**
le joint de culasse (1) est constitué d'une ou plusieurs paires (15, 15') de couches (5, 5', 7, 7').

14. Joint de culasse (1) selon l'une des revendications précédentes, **caractérisé en ce que** le ou les dispositifs d'arrêt (9, 9') sont disposés de manière radialement adjacente à l'une des ondulations (6, 6', 8, 8').
